(19) Europäisches Patentamt
European Patent Office
Office européen des brevets

(11) Publication number: **0 027 516**
**A1**

(12) **EUROPEAN PATENT APPLICATION**

(21) Application number: 80104958.6

(22) Date of filing: 21.08.80

(51) Int. Cl.³: C 08 L 67/02
D 21 H 5/20, C 08 J 3/16
//(C08L67/02, 79/04, 77/10)

(30) Priority: 24.08.79 JP 107087/79
24.08.79 JP 107088/79

(43) Date of publication of application:
29.04.81 Bulletin 81/17

(84) Designated Contracting States
DE FR GB NL

(71) Applicant: TEIJIN LIMITED
11, 1-Chome, Minamihonmachi Higashi-ku
Osaka-shi Osaka(JP)

(72) Inventor: Tabe, Yutaka
1-19-30, Hozu-cho
Iwakuni-shi Yamaguchi-ken(JP)

(72) Inventor: Takamoto, Hiromitsu
2-88-17, Minamiiwakuni-cho
Iwakuni-shi Yamaguchi-ken(JP)

(72) Inventor: Shimada, Keizo
3-1-40, Yamate-cho
Iwakuni-shi Yamaguchi-ken(JP)

(74) Representative: Hoeger, Stellrecht & Partner
Uhlandstrasse 14c
D-7000 Stuttgart 1(DE)

(54) **Artificial pulp particles, process for producing same and paper-like sheet prepared therefrom.**

(57) Artificial pulp particles useful for producing paper-like sheet having excellent insulating property, heat resistance and reduced moisture-absorbing property, are composed of a plurality of fine particulate core consistuents consisting of a polyester material, for example, polyethylene terephthalate or polyethylene 2,6-napthalate, which are embedded whithin and connected to each other by a matrix constituent consisting of a heat-resistant aromatic polymer material, for example, poly-m-phenylene isophthalamide, which is soluble in a solvent not capable of dissolving therein the polyester material.

EP 0 027 516 A1

# ARTIFICIAL PULP PARTICLES AND PROCESS FOR PRODUCING THE SAME

TITLE MODIFIED
see front page

## FIELD OF THE INVENTION

The present invention relates to artificial pulp particles and a process for producing the same. More particularly, the present invention relates to artificial pulp particles useful for producing electric insulating paper-like sheet materials having excellent heat-resistance and mechanical strength, and a desirable poor moisture--absorbing property, by a conventional paper-making process, and a process for producing the artificial pulp particles.

## BACKGROUND OF THE INVENTION

It is well known that wood pulp particles are used for producing electric insulating paper which is used in a wide variety of electric devices, apparatuses and machines. However, the conventional electric insulating paper is unsatisfactory due its high moisture-absorbing property, poor heat-resistance and poor dielectric property. Especially, in various miniaturized and weight-reduced electric devices and machines, for example, electric motors, generators and transformer, heat-resistant, very thin and light electric insulating sheets are needed. However, when the conventional insulating paper is made very thin, the resultant thin paper is unsatisfactory in its heat-resistance, insulating property and resistance to moisture.

Accordingly, various approaches have been taken to provide new types of insulating sheets having an excellent insulating property, heat-resistance and mechanical strength and a poor moisture-absorbing property. For example, Japanese Patent Application Publication (kokoku) No. 43-20421(1968) discloses an electric insulating paper--like sheet in which a number of mica particles are mixed and entangled with a number of substantially non-melted aromatic polyamide fibrids. This paper-like sheet exhibits

an excellent heat-resistance. However, the mechanical strength and moisture-absorbing property of the paper-like sheet is variable depending upon the content of the mica particles in the paper-like sheet. That is, a large content of the mica particles results in a poor mechanical strength of the paper-like sheet. Also, a small content of the mica particles causes the resultant paper-like sheet to exhibit an undesirably enhanced moisture-absorbing property.

Japanese Patent Application Publication (kokoku) No. 38-8421(1963) discloses a modified paper which has been produced from a mixture of kraft pulp and polypropylene fibers by the paper-making process. However, this modified paper is unsatisfactory due to it poor heat-resistance. Also, the mechanical strength and moisture-absorbing property of the modified paper is variable depending on the content of the polypropylene fibers in the modified paper. That is, a large content of the polypropylene fiber causes the resultant modified paper to exhibit a poor mechanical strength and a small content of the polypropylene fibers results in an undesirably high moisture--absorbing property of the modified paper.

Also, it is known that polyesters, for example, polyethylene terephthalate and polyethylene naphthalates, exhibit an excellent heat-resistance substantially no moisture-absorbing property and a desirable electric insulating property, and therefore, are useful as an electric insulating material. The polyester insulating material is usually used in the form of film, woven fabric or non-woven fabric. However, the polyester insulating material has not yet supplied in the form of paper-like sheet, which is strongly desired on the commercial market.

SUMMARY OF THE INVENTION

An object of the present invention is to provide artificial pulp particles useful for producing a paper-like sheet having an excellent electric insulating property, heat-resistance and mechanical strength and substantially

no moisture-absorbing property, and a process for producing the same.

Another object of the present invention is to provide artificial pulp particles useful for producing a paper-like insulating sheet by a conventional paper-making process, and a process for producing the same.

The above-mentioned objects can be attained by the artificial pulp particles of the present invention which is characterized in that a plurality of fine particulate core constituents consisting of a polyester mateiral are embedded within and connected to each other by a matrix constituent consisting of a heat-resistant aromatic polymer material which is soluble in a solvent not capable of dissolving therein the polyester material, to form a body of pulp particle.

The above-mentioned artificial pulp particles can be produced by a process of the present invention which is characterized by the steps of:

(1) preparing a dispersion in which fine particulate polyester material is dispersed in a solution of a heat-resistant aromatic polymer material in a solvent which is not capable of dissolving therein hte polyester material;

(2) bringing the dispersion into contact with a coagulating liquid while vigorously stirring the resultant mixture, whereby the heat-resistant aromatic polymer material is coagulated from the mixture while forming a number of particles in each of which a plurality of fine particulate polyester material core constituents are embedded within and connected to each other by a matrix constituent consisting of the coagulated aromatic polymer material, and;

(3) separating the particles from the mixture.

The artificial pulp particles of the present invention are readily converted into a paper-like sheet by a paper-making process.

DETAILED DESCRIPTION OF THE INVENTION

In each of the artificial pulp particles of the present invention, it is important that a plurality of fine particulate core constituents consisting of a polyester material be embedded within and connected to each other by a matrix constituent consisting of a heat-resistant aromatic polymer material, so as to form a body of amorphous pulp particle, the aromatic polymer material being soluble in a solvent which is not capable of dissolving therein the polyester material.

The polyester material usable for the present invention preferably contains at least 85% by weight of at least one member selected from the group consisting of:

(A) polyesters containing at least 85 molar % of ethylene terephthalate recurring unit;

(B) polyesters containing at least 85 molar % of at least one member selected from the group consisting of ethylene 2,6-naphthalate and ethylene 2,7-naphthalate recurring units;

(C) wholly aromatic polyesters, and;

(D) polyesters containing at least 85 molar % of butylene terephthalate recurring unit.

The above-mentioned polyester (A) may be (1) a polyethylene terephthalate homopolymer or (2) a copolyester comprising 85 molar % or more of the ethylene terephthalate recurring unit and the balance consisting of another alkylene dicarboxylate recurring unit, preferably, an ethylene aromatic dicarboxylate recurring unit.

The polyester (B) may be (3) a polyethylene 2,6--naphthalate homopolymer, (4) a polyethylene 2,7-naphthalate homopolymer, (5) a polyethylene 2,6-naphthalate-2,7-naphthate copolymer or (6) a copolymer comprising 85 molar % or more of at least one member selected from ethylene 2,6-naphthalate and ethylene 2,7-naphthalate recurring units, and the balance consisting of another ethylene dicarboxylate recurring unit, preferably, an ethylene aromatic dicarboxylate recurring unit, for example, ethylene terephthalate or ethylene isophthalate recurring unit. The polyester (C)

contains at least 85 molar % of at least one wholly aromatic ester recurring unit selected from those of the formulae (I) and (II)

$$- CO - Ar_1 - CO - O - Ar_2 - O - \qquad (I)$$

and

$$- O - Ar_3 - CO - \qquad (II)$$

wherein $Ar_1$ , $Ar_2$ and $Ar_3$ respectively represent a divalent aromatic radical.

The polyester (C) may be a wholly aromtic polyester (7) consisting of the recurring unit of the formula (I) which is prepared by polycondensing at least one aromatic dicarboxylic acid or its functional derivative with at least one aromatic dihydroxyl compound; another wholly aromatic polyester (8) consisting of the recurring unit of the formula (II) which is prepared by polycondensing one or aromatic hydroxycarboxylic acids; or a copolyester (9) consisting of at least 85 molar % of at least one recurring unit selected from those of the formulae (I) and (II), and the balance consisting of another recurring unit, for example, an alkylene dicarboxylate recurring unit, preferably, an ethylene aromatic dicarboxylate recurring unit.

The aromatic dicarboxylic acid may be selected from the group consisting of terephthalic acid, isophthalic acid and naphthalene dicarboxylic acids. The functional derivatives of the aromatic dicarboxylic acids may be dianhydrides, or dihalides of the aromatic dicarboxylic acids. The aromatic dihydroxy compounds may include 2,2-bis(4-hydroxyphenyl)propane, that is, bis-phenol A, 1,1-bis(4-hydroxyphenyl)cyclohexane, that is, bis-phenol Z, 1,1-bis(4-hydroxyphenyl)ethane, bis(4-hydroxyphenyl)methane, 1,2-bis(4-hydroxyphenyl)ethane, bis(4-hydroxyphenyl)cyclohexylmethane, 3,3-bis(4-hydroxyphenyl)tentane, bis(4-hydroxyphenyl)sulfone, bis(4-hydroxyphenyl)ether, hydroquinone and 4,4'-dihydroxybiphenyl. It is preferable that the aromatic dihydroxyl compound be bis-phenol A or hydroquinone.

The polyester (C) may contain, as a minor portion of

dihydroxyl moiety, one or more aliphatic dihydroxyl compounds, for example, ethylene glycol, neopentyl glycol, hexamethylene glycol, tetramethylene glycol, trimethylene glycol, and cyclohexane dimethylol. The content of the aliphatic dihydroxyl moiety should not exceed 15% based on the entire molar amount of the dihydroxyl moiety.

The polyester (D) may be (10) a polybutylene terephthalate homopolymer or (11) a copolymer comprising 85 molar % or more of the butylene terephthalate recurring unit and the balance consisting of another alkylene dicarboxylate recurring unit, preferably, an alkylene aromatic dircarboxylate recurring unit.

The polyester material may be a mixture of at least 85% by weight of at least one member selected from the above-mentioned polyethylene terephthalate (1), ethylene terephthalate copolymers (2), polyethylene 2,6-naphthalate (3) polyethylene 2,7-naphthalate (4), polyethylene 2,6--naphthalate 2,7-naphthalate copolymers (5), ethylene naphthalate copolymers (6), wholly aromatic polyesters (7) and (8), wholly aromatic copolyester (9), polybutylene terephthalate (10) and butylene terephthalate copolymer (11), and the balance consisting of at least one other polymeric material, for example, wholly aromatic polyamide and polyolefin.

The polyester material may contain a small amount of one or more additives, for example, flame-retartant, delustering agent, lubricant, anti-oxidant and crystal nucleus-forming agent.

The fine particulate polyester material can be prepared by pulverizing polyester pellets, films, sheets, fibers or other shaped articles, or wastes which have been generated when the above-mentioned goods have been produced, by a conventional pulverizing method. It is preferably that the pulverizing operation be applied to chilled polyester goods or to polyester goods which have been heat-treated and/or treated with a solven so as to increase the crystallinity of the polyester goods.

The size of the fine particulate polyester material may be varied depending on the use thereof. Usually, it is preferable that the particles of the polyester material have an average size not exceeding 500 microns, more preferably, not exceeding 100 microns, still more preferably, not exceeding 50 microns. Particularly, in the case of the artificial pulp particles to be used for producing an electric insulating paper-like sheet, it is preferable that the size of the particles of the polyester material be 20 microns or less.

The fine particulate polyester material may be used in the state of a mixture with a small amount of fine particles of an inorganic material, for example, mica, alumina, silica, kaolin and talc, and/or fine particles of an organic materials other than the polyester material, flame-retardant, pigment, lubricant, crystal nucleus-forming agent or anti-oxidant.

In the artificial pulp particles of the present invention, it is preferable that the amount of the fine particulate core constituents consisting of the polyester material be in a range of from 10 to 95%, more preferably, from 20 to 85%, still more preferably, from 40 to 80%, based on the entire weight of the pulp particles. When the amount of the core constituents is less than 10%, the resultant pulp particles are, sometimes, unsatisfactory in their resistance to moisture. Also, if the core constituents are contained in an amount of more than 95% in the pulp articles, the resultant paper-like sheet may, sometimes, exhibit an unsatisfactory mechanical strength and heat--resistance.

The heat-resistant aromatic polymer material usable for the present invention contains at least 85% by weight of at least one aromatic polymer selected from the group consisting of:

(A) aromatic polyamides containing at least 85 molar % of at least one recurring unit selected from the group consisting of those of the formulae (I') and (II')

$$- CO - Ar_4 - CONH - Ar_5 - NH - \quad (I')$$

and

$$- NH - Ar_6 - CO - \quad (II')$$

wherein $Ar_4$ , $Ar_5$ and $Ar_6$ respectively represent a divalent aromatic radical;

(B) nitrogen-containing heterocyclic polymers selected from the group consisting of:

(1) aromatic polyamide imides containing at least 85 molar % of a recurring unit of the formula (III)

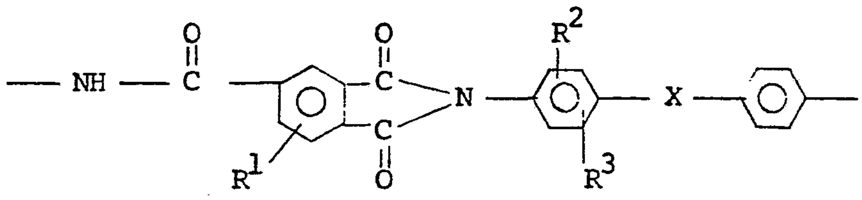

(III)

wherein X represents a divalent bond selected from the group consisting of - O - , - SO - , - CO - and alkylene radical having 1 to 2 carbon atoms, and $R^1$, $R^2$, and $R^3$ respectively represent, independently from each other, a member selected from the group consisting of a hydrogen atom, alkyl radicals having 1 to 2 carbon atoms, alkoxyl radical having 1 to 2 carbon atoms and halogen atoms;

(2) aromatic polyamide imidazoles containing at least 85 molar % of a recurring unit of the formula (IV)

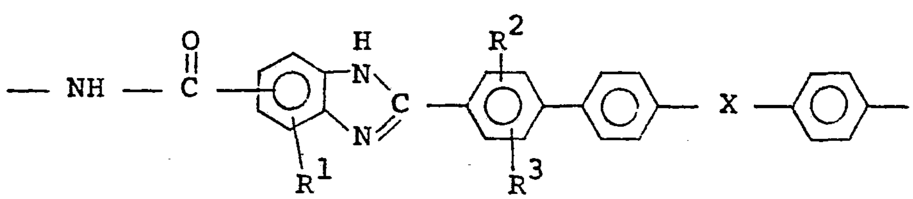

(IV)

wherein X, $R^1$, $R^2$ and $R^3$ are as defined above;

(3) aromatic polyimides containing at least 85 molar % of a recurring unit of the formula (V)

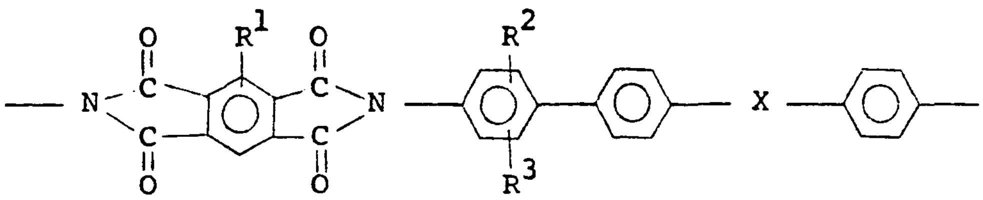 (V)

wherein X, $R^1$, $R^2$ and $R^3$ are as defined above;

(4) aromatic polyazoles selected from the group consisting of polybenzimidazoles, polybenzoxazoles and polybenzthiazoles, each unsubstituted or substituted by at least one member selected from the group consisting of alkyl radicals having 1 to 2 carbon atoms, alkoxyl radicals having 1 to 2 carbon atoms and halogen atoms;

(5) polymers selected from the group consisting of polyquinozoline-dions, polybenzoxadinones, polyquinozolones and polyquinoxalines, and;

(6) polymers selected from the group consisting of polythiazoles, polyoxazoles, polyoxadiazole, polyhydantoins and polyparabanic;

(C) aromatic polyamide hydrazide containing at least 85 molar % of a recurring unit of the formula (VI)

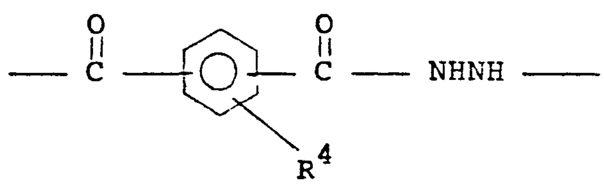 (VI)

wherein $R^4$ represents a member selected from the group consisting of a hydrogen atom, alkyl radicals having 1 to 2 carbon atoms, alkoxyl radicals having 1 to 2 carbon atoms and halogen atoms;

(D) polymers consisting at least 85 molar % of a recurring unit of the formula (VII)

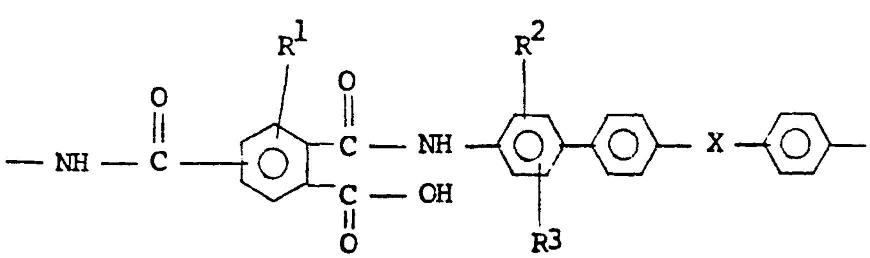 (VII)

wherein X, $R^1$, $R^2$ and $R^3$ are as defined above;

(E) polymers selected from the group consisting of aromatic polyhydrazides and aromatic polyureas, and;

(F) polyphenylene oxide and polyarylene oxides.

The aromatic polyamide usable for the present invention may be an aromatic polyamide containing at least 85 molar % of at least one recurring unit selected from those of the formula (I')

$$- CO - Ar_4 - CONH - Ar_5 - NH - \qquad (I')$$

wherein $Ar_4$ and $Ar_5$ respectively represent, independently from each other, a divalent aromatic radical. This type of the aromatic polyamide can be prepared by polycondensing at least one aromatic dicarboxylic acid (or its acid halide) with at least one aromatic diamine.

The aromatic dicarboxylic acid may include terephthalic acid and isophthalic acid. The aromatic diamine may include m-phenylene diamine 4,4'-diaminodiphenylether, 4,4'-diaminodiphenylmethane, xylylene diamine, and N-methyl--p-phenylenediamine.

The typical aromatic polyamide having the recurring unit of the formula (I') is poly-m-phenylene isophthalamide, copolymers of m-pheylene diamine with isophthalic acid and terephthalic acid, and poly-N-methyl-p-phenylene terephthalamide.

The aromatic polyamide may be one containing at least 85 molar % of the recurring unit of the formula (II')

$$- NH - Ar_6 - CO - \qquad (II')$$

wherein $Ar_6$ is a divalent aromatic radical. This type of the aromatic polyamide can be prepared by precondensing at least one aromatic amino carboxylic acid, for example, p-aminobenzoic acid, m-aminobenzoic acid and p-aminomethyl benzoic acid. The typical aromatic polyamide having the recurring unit of the formula (II') is a polycondensation product of p-aminobenzoic acid.

The aromatic polyamide may be a copolyamide consisting of at least one recurring unit of the formula (I') and at least one recurring unit of the formula (II'). This type

of aromatic copolyamide can be prepared by polycondensing at least one aromatic dicarboxylic acid, at least one aromatic diamine and at least one aromatic aminocarboxylic acid. For example, the aromatic copolyamide may be a polycondensation product of m-phenylene diamine, isophthalic acid chloride and p-aminobenzoic acid chloride.

The aromatic polyamide may be another copolyamide consisting of at least 85 molar % of at least one recurring unit selected from those of the formulae (I') and (II') and the balance of at least one other recurring unit, for example, aliphatic amides.

The aromatic polyamide imide (B-(1)) may be a homopolymer consisting of a recurring unit of the formula (III), a copolymer consisting of two or more recurring units selected from those of the formula (III) or another copolymer consisting of at least 85 molar % of at least one recurring unit selected from those of the formula (III) and the balance consisting of another recurring unit, for example, aliphatic amide or aromatic hydrazide recurring unit.

The aromatic polyamide imidazoles (B-(2)) may be a homopolymer consisting of a recurring unit of the formula (IV), a copolymer consisting of two or more recurring units selected from those of the formula (IV) or another copolymer consisting of at least 85 molar % of at least one recurring unit selected from those of the formula (IV) and the balance consisting of another recurring unit, for example, aliphatic amide, aromatic imide or aromatic hydrazide recurring unit.

The aromatic polyimide (B-(3)) may be a homopolymer consisting of a recurring unit of the formula (V), a copolymer consisting of two or more recurring units selected from those of the formula (V) or another copolymer consisting of at least 85 molar % of at least one recurring unit selected from those of the formula (V) and the balance consisting of another recurring unit, for example, aliphatic amide, aromatic amide or aromatic hydrazide recurring unit.

The aromatic polyamide hydrazine (C) may be a homopolymer consisting of a recurring unit of the formula (VI), a copolymer consisting of two or more recurring units selected from those of the formula (VI) or another copolymer consisting of at least 85 molar % of at least one recurring unit selected from those of the formula (VI) and the balance consisting of another recurring uint, for example, aromatic imide or aliphatic amide recurring unit.

The aromatic polymer (D) may be a homopolymer consisting of a recurring unit of the formula (VII), a copolymer consisting of two ore more recurring units selected from those of the formula (VII) or another copolymer consisting of at least 85 molar % at least one recurring unit selected from those of the formula (VII) and the balance consisting of another recurring unit, for example, aliphatic amide or aromatic hydrazide recurring unit.

The aromatic polyhydrazide and aromatic polyurea may be copolymerized with one or more members selected from aromatic dicarboxylic acids, for example, isophthalic acid and terephthalic acid, benzophenone tetracarboxylic anhydride and pyromellitic anhydride.

The heat-resistant aromatic polymeric material preferably has a softening point of 155°C or more, more preferably, 250°C or more, and exhibits an excellent resistance to thermal deterioration thereof at a temperature in a range of from 180°C to 250°C in the ambient atmosphere.

The artificial pulp particles can be produced by the process of the present invention. In this process, a dispersion is prepared in which finely pulverized polyester meterial is dispersed in a solution of a heat-resistant aromatic material in a solvent not capable of dissolving therein the polyester material.

The solvent for the heat-resistant aromatic polymer materail may be either an organic solvent or an inorganic solvent, as long as the solvent is capable of dissolving the heat-resistant aromatic polymer material but not capable of dissolving the polyester material. The preferable

solvent is an organic solvent comprising at least one member selected from the group consisting of N-methyl--2-pyrrolidone, N,N-dimethylformamide, N,N-dimethyl acetamide, dimethyl sulfoxide, hexamethyl phosphoramide and tetramethyl urea. The above-mentioned organic solvent may contain at least one inorganic salt which is effective for enhancing the solubility of the organic solvent for the heat-resistant aromatic polymer material. The inorganic salt may be selected from the group consisting of lithium chloride and calcium chloride. In this case, it is preferable that the amount of the inorganic salt be in a range of from 0.5 to 40%, based on the entire weight of the solvent.

The amount of the heat-resistant aromatic polymer material to be contained in the solution is variable depending on the amount of the polyester material to be contained in the dispersion. However, usually, it is preferable that the heat-resistant aromatic polymer material be contained in an amount of from 2 to 15 % by weight in the solution.

The dispersion may be prepared by uniformly dispersing the polyester material in the solvent and, then, dissolving the heat-resistant aromatic polymer material in the solvent, or by dissolving the heat-resistant aromatic polymer material in the solvent and, then, dispersing the polyester material in the solution. In the case where the aromatic polymer material is produced in a solvent by a solution polymerization method, and the resultant polymer material is in the state of a solution, the polyester material may be added to the solution copolymerization mixture either before the start of the polymerization procedure or after the completion of the polymerization procedure.

In the process of the present invention, the dispersion is brought into contact with a coagulating liquid while vigorously stirring the mixture. This contact results in coagulation of the aromatic polymer material from the mixture and the coagulated aromatic polymer material

deposits together with the fine particulate polyester material to form a number of particles, within each of which a plurality of fine particulate polyester material core constituents are embedded and connected to each other by a matrix constituent consisting of the coagulated aromatic polymer material.

The coagulating liquid is a liquid or solution which is compatible with the solvent but not compatible with the aromatic polymer material. When the solvent for the aromatic polymer material consists of at least one organic compound, the coagulating liquid contains at least one member selected from the group consisting of water, glycerol, ethylene glycol and mixtures of water with a solvent the same as that used for dissolving the heat-resistant aromatic polymer material. When the solvent for the aromatic polymer material is an inorganic solvent, for example, an aqueous solution of an inorganic salt, the coagulating liquid may be water or a mixture of water with the inorganic solvent.

In the contacting procedure of the dispersion with the coagulating liquid, the mixture is vigorously stirred so that a strong shearing and/or beating action is applied to the resultant coagulated aromatic polymer material matrix component. This application of the shearing and/or beating action is very important to provide the amorphous artificial pulp particles having a appropriate size and shape, and being capable of entangling with each other so as to form a paper-like sheet by way of a conventional paper-making method. The shearing or beating action may be created by using any type of stirring device as long as the action can be properly applied to the coagulated aromatic polymer material. Usually, it is preferable that the stirring procedure be carried out by using stirring wings capable of rotating at a very high speed. The stirring procedure may be applied to the mixture of the dispersion and the coagulating liquid contained in a tank-shaped vessel or tube-shaped conduit. The resultant.

artificial pulp particles preferably have a size of 10 mesh or smaller.

The artificial pulp particles of the present invention are useful for producing a paper-like sheet by using a conventional wet type paper-making apparatus, for example, a long net-type or circular net-type paper-making machine. The paper-like sheet can be produced from either the artificial pulp particles of the present invention alone, or a mixture of the artificial pulp particles and short fibers. The short fibers are effective for obtaining the desired tensile strength, ultimate elongation, dielectric breakdown strength and impregnating capacity of the paper--like sheet. However, it is preferable that the amount of the short fibers in the paper-like sheet be in a range of from 20 to 95% by weight, more preferably, from 40 to 90% by weight. Also, the individual short fibers preferably have a denier of from 0.5 to 10, more preferably, from 1.0 to 5, and a length of from 1 to 30 mm, more preferably, from 2 to 20 mm. Furthermore, the short fibers are preferably heat-resistant.

The short fibers may be a mixture of two or more different types of short fibers. The short fibers may be those consisting of at least one polymeric material selected from the same polyester materials and heat-resistant aromatic polymer materials as those used for the artificial pulp particle of the present invention. That is, the short fibers may be made from the following polymeric materials.

(1) Polyester materials containing at least 85% by weight of at least one member selected from the group consisting of:

(A) polyesters containing at least 85 molar % of an ethylene terephthalate recurring unit;

(B) polyesters containing at least 85 molar % of at least one member selected from the group consisting of an ethylene 2,6-naphthalate recurring unit and an ethylene 2,7-naphthalate recurring unit;

(C) polyesters containing at least 85 molar % of at least one wholly aromatic ester recurring unit selected from those of the formulae (I) and (II), and;

(D) polyesters containing at least 85 molar % of a butylene terephthalate recurring unit.

(2) Heat-resistant aromatic polymer material containing at least 85% by weight of at least one member selected from the group consisting of:

(A) aromatic polyamide containing at least 85 molar % of at least one aromatic amide recurring unit selected from those of formulae (I') and (II');

(B) nitrogen-containing heterocyclic polymers selected from the group consisting of:

(1) aromatic polyamide imides containing at least 85 molar % at least one aromatic amideimide recurring unit selected from those of the formula (III);

(2) aromatic polyamide imidazoles containing at least 85 molar % of at least one aromatic amideimidazole recurring unit selected from those of the formula (IV);

(3) aromatic polyimides containing at least 85 molar % of at least one aromatic imide recurring unit selected from those of the formula (V);

(4) aromatic polyazoles selected from polybenzimidazoles, polybenzoxazoles and polybenzthiazoles;

(5) polymers selected from polyquinozolinedions, polybenzoxadinones, polyquinozolones and polyquinoxalines, and;

(6) polymers selected from polythiazoles, polyoxazoles, polyoxadiazoles, polyhydantoins and polyparabanic acid;

(C) aromatic polyamide hydrazines containing at least 85 molar % of at least one aromatic amide hydrazine recurring unit selected from those of the formula (VI);

(D) polymers containing at least 85 molar % of at least one recurring unit selected from those of the formula (VII); and;

(E) polyphenylene oxides and polyarylene oxide.

The short fibers may be inorganic short fibers, for example, glass fibers, asbesto fibers, rock wool fibers, slag fibers, silica fibers, bauxite fibers, kayanite fibers, boron-containing compound fibers, potassium titanate fibers, magnesia fibers, alumina whiskers or silicon nitride whiskers.

Otherwise, the short fibers may be cellulose type fibers, for example, cotton, ramie, linen, rayon, cupra or cellulose acetate fibers.

The paper-like sheet which has been produced from the artificial pulp particles alone or the mixture thereof with the short fibers by the wet-type paper-making process, is dried and, then, subjected to a practical use. Also, the dried paper-like sheet may be hot-pressed or hot-rolled to adjust the thickness and mechanical strength thereof to desired values, before subjecting it to a practical use. In this case, in order to obtain an enhanced mechanical strength and an appropriate softenes of the paper-like sheet, it is preferable that the pressing or rolling procedure be carried out at a temperature of from 50°C to 320°C, under a pressure of from 5 to 400 $kg/cm^2$.

The following specific examples are presented for the purpose of clarifying the present invention. However, it should be understood that the these examples are intended only to be examples of the present invention and are not intended to limit the present invention in any way.

Example 1

A. Preparation of finely pulverized polyester material

A polyethylene terephthalate sheet having a thickness of 0.5 mm and an intrinsic viscosity of 0.655 (determined in o-chlorophenol at 30°C) was hot-rolled at a speed of 25 m/min, by using a pair rolling rollers, each having a diameter of 75 mm, at a temperature of 120°C, at

a rolling ratio, (that is, ratio in thickness of non-rolled sheet to rolled sheet) of 4.5. The hot-rolled sheet was dried at a temperature of 170°C for two hours and, then, heat-treated at a temperature of 255°C for two days, and thereafter, at a temperature of 265°C for two days. The heat-treated polyethylene terephthalate sheet was preliminarily crushed by using a hammer mill and, then, pulverized by using a jet-stream pulverizing machine. The particles of the pulverized polyethylene terephthalate had an average size of 3 microns.

B. Preparation of a heat-resistant aromatic polymer material solution

90 parts by weight of a powdered poly-m-phenylene isophthalamide having an inherent viscosity (η inh) of 1.9, which had been determined in a concentration of 0.5 g/100 ml in a 95% sulfuric acid at a tmeperature of 30°C, were dissolved in a mixture solvent consisting of 910 parts by weight of N-methyl-2-pyrrolidone and 40 parts by weight of water.

C. Preparation of a dispersion

360 parts by weight of the finely pulverized polyethylene terephthalate were uniformly dispersed in the above-mentioned prepared poly-m-phenylene isophthalamide solution by using a kneader.

D. Preparation of a coagulating liquid

A coagulating liquid was prepared by mixing 30 parts by weight of N-methyl-2-pyrrolidone with 70 parts by weight of water.

E. Production of artificial pulp particles

A tube-stirrer type continuous pulp-forming apparatus having a stirring device composed of a combination of a stator having a baffle and a turbine wing type rotor, and a supply inlet for the dispersion, another supply inlet for the coagulating liquid and a discharge outlet for the resultant artificial pulp particle slurry, was used. The dispersion and the coagulating liquid were simultaneously fed at feeding rates of 0.4 kg/min. and 15 kg/min. respectively, to the pulp-forming apparatus,

while the resultant slurry was discharged from the apparatus. The temperatures of the dispersion and the coagulating liquid were adjusted to 50°C and 35°C, respectively. The rotation number of the rotor was 9600 r.p.m.

The discharged slurry containing the resultant artificial pulp particles were allowed to stand at a temperature of 35°C for about 30 minutes. Thereafter, the slurry was placed in a Nutsche vacuum filtering device to separate the artificial pulp particles from the slurry. The filtering device was provided with a filter consisting of a 150 mesh stainless steel net. The resultant filtrate was clear and contained substantially no polyethylene terephthalate particles. That is all the polyethylene terephthalate particles were embedded within the matrix consisting of the poly-m-phenylene isophthalamide. The artificial pulp particles were completely washed with ion-exchanged water by using the Nutsche vacuum filtering device.

F. Production of paper-like sheet

An aqueous dispersion was prepared from 1.76 g (dry weight) of the artificial pulp particles and 0.44 g of aromatic polyamide fibers having a denier of 1.5 and a length of 7 mm. The aqueous dispersion was subjected to a wet paper-making process by using a Tappi Standard paper-making machine. It was observed that the paper-like sheet formed on a paper-forming net was readily separated from water and, therefore, the paper-forming procedure was smoothly carried out without difficulty. The resultant paper-like sheet was uniform in quality. The sheet was dried at a temperature of 105°C and, then, hot-pressed at a temperature of 220°C under a pressure of 200 $kg/cm^2$. The pressed paper-like sheet had a thickness of 105 microns and exhibited satisfactory properties as indicated below.

| | |
|---|---|
| Tensile strength | ... 2.5 $kg/mm^2$ |
| Ultimate elongation | ... 10% |
| Dielectric breakdown strength | ... 24 kv/mm |
| Equilibrium moisture content (65% RH) | ... 1.0% |
| Ratio in tensile strength of heat-treated sheet(*) to non-treated sheet | ... 115% |
| Ratio in ultimate elongation of heat-treated sheet(*) to non-treated sheet | ... 80% |

Note : (*)- The heat-treatment was applied to the paper-like sheet at a temperature of 210°C, for 100 hours, in the ambient atmosphere.

Comparative Example 1

The same procedures as those described in Example 1 were carried out, except that no polyethylene terephthalate particles were used. The resultant artificial pulp particles exhibited a poor paper-forming property. The resultant sheet exhibited an undesirably large equilibrium moisture content of 6.3%.

Example 2

A. Preparation of a dispersion

A solution (A) was prepared by the following procedures.

Two molar parts of trimellitic anhydride were condensed with one molar part of 4,4'-diamino-diphenylmethane in N-methyl-2-pyrrolidone to prepare a bis-imide compound. This bis-imide compound was reacted with 2 molar parts of trimellitic anhydride and 3 molar parts of 4,4'-diphenylmethane diisocyanate per molar part of the 4,4'-diamino-diphenylmethane to prepare a polyamide imide having an intrinsic viscosity of 0.76 determined in N-methyl-2-pyrrolidone at a temperature of 30°C. The resultant solution (A) contained 25% by weight of the polyamide imide in N-methyl-2-pyrrolidone.

A dispersion (B) was prepared by mixing 2350 parts by weight of N-methyl-2-pyrrolidone with 190 parts by

weight of ion-exchanged water and, then, with 1275 parts by weight of the same polyethylene terephthalate particles, and by homogenizing the mixture for 30 minutes by using a homogenizing mixer.

A dispersion (C) was prepared by uniformly mixing 900 parts by weight of the solution (A) with 3815 parts by weight of the dispersion (B).

B. Preparation of a coagulating liquid

A coagulating liquid was prepared by mixing 66 parts by weight of N-methyl-2-pyrrolidone with 34 parts by weight of water.

C. Production of artificial pulp particles

The dispersion (C) and the coagulating liquid were simultaneously fed at feeding rates of 0.5 kg/min and 10 kg/min, respectively, into the same pulp-forming apparatus as that described in Example 1, while discharging the resultant slurry of the artificial pulp particles from the apparatus. The temperatures of the dispersion (C) and the coagulating liquid were adjusted to 30°C and 35°C, respectively, and the rotation number of the rotor was 9,600 r.p.m.

The slurry was subjected to a centrifugal separater to separate the resultant artificial pulp particles from the slurry. The separated artificial pulp particles were washed with ion-exchanged water. The content of the polyethylene terephthalate in the artificial pulp particles was 85% by weight, which was determined by treating a predetermined amount of the artificial pulp particles with N-methyl-2-pyrrolidone at room temperature to allow the polyethylene terephthalate to be dissolved thereinto and, then, by measuring the loss in weight of the pulp particles due to the treatment.

D. Production of a paper-like sheet

An aqueous dispertion containing 1.32 g (dry weight) of the artificial pulp particles and 0.88 g of polyethylene terephthalate fibers, having a denier of 1.5 and a length of 5 mm, was subjected to a wet paper-making

process by using a Tappi Standard paper-making machine. It was observed that the sheet formed on a paper-forming net was readily separated from water and, therefore, the paper-making procedure was smoothly carried out without difficulty. The resultant paper-like sheet was uniform in quality. The paper-like sheet was hot-pressed at a temperature of 230°C under a pressure of 200 $kg/cm^2$. The hot pressed paper-like sheet exhibited the following properties.

| | |
|---|---|
| Tensile strength | ... 3.7 $kg/mm^2$ |
| Ultimate elongation | ... 14% |
| Dielectric breakdown strength | ... 22 kv/mm |
| Equilibrium moisture content (65% RH) | ... 0.7% |

Example 3

The same procedures as those mentioned in Example 1 were carried out, except that the finely pulverized polyethylene terephthalate was replaced by a finely pulverized polyethylene 2,6-naphthalate which had been produced by the following method.

Polyethylene 2,6-naphthalate filaments, each having a denier of 2.0, were produced from polyethylene 2,6--naphthalate having an intrinsic viscosity of 0.55 by melt-spinning it and, then, by drawing the melt-spun filaments at a draw ratio of 4.0. The drawn filaments were dried at a temperature of 170°C for two hours and, thereafter, heat-treated at a temperature of 260°C for 24 hours, and then, at a temperature of 270°C for 24 hours in a nitrogen gas atmosphere. The heat-treated filaments exhibited a melting point of 296°C. The filaments were cut to a length of about 5 mm. The resultant cut fibers were pulverized by using the same pulverizing machine as that described in Exmaple 1. The resultant particles of the polyethylene 2,6-naphthalate had an average size of

about 2.5 microns.

The resultant artificial pulp particles exhibited a satisfactory paper-making property. The resultant paper-like sheet was hot-pressed at a temperature of 290°C under a pressure of 200 $kg/cm^2$. The hot-pressed paper-like sheet exhibited the following properties.

| | |
|---|---|
| Tensile strength | ... 3.5 $kg/mm^2$ |
| Ultimate elongation | ... 6.5% |
| Equilibrium moisture content (65%RH) | ... 0.8% |
| Dielectric breakdown strength | ... 36 kv/mm |
| Ratic in tensile strength of heat-treated sheet(*) to non-treated sheet | ... 110% |
| Ratio in ultimate elongation of heat-treated sheet(*) to non-treated sheet | ... 85% |

Note : (*)- The heat treatment was carried out at a temperature of 210°C, for 100 hours, in the ambient atmosphere.

Example 4

The same procedures as those mentioned in Example 1 were carreid out, except that the finely pulverized polyethylene terephthalate was replaced by a polyethylene terephthalate powder which had been obtained by screening a powder generated in a drying process for polyethylene terephthalate pellets, to be used for producing polyethylene terephthalate filaments or fibers, through a 200 mesh sieve.

The resultant artificial pulp particles exhibited a satisfactory paper-making property. Also, the resultant peper-like sheet exhibited similar properties as those mentioned in Exmaple 1.

Example 5

The same procedures as those described in Example 1

were carried out, except that the finely pulverized polyethylene terephthalate was replaced by a mixture of 340 parts by weight of the same finely pulverized polyethylene terephthalate as that described in Example 1 and 20 parts by weight of tarc. The resultant artificial pulp particles exhibited a satisfactory paper-forming property. Also, during the paper-making process, it was found that substantially no polyethylene terephthalate and tarc were removed from the artificial pulp particles. The resultant paper-like sheet exhibited the following properties.

| | |
|---|---|
| Tensile strength | ... 2.3 $kg/mm^2$ |
| Ultimate elongation | ... 10% |
| Dielectric breakdown strength | ... 22 kv/mm |
| Equilibrium moisture content (65% RH) | ... 0.9% |

Example 6

A. Preparation of finely pulverized polyester material

A polyethylene terephthalate sheet having a thickness of 0.5 mm and an inherent viscosity of 0.655 (determined in o-chlorophenol at 30°C) was hot-rolled at a speed of 25 m/min, by using a pair rolling rollers, each having a diameter of 75 mm, at a temperature of 75 mm, at a rolling ratio; (that is, ratio in thickness of non-rolled sheet to rolled sheet) of 4.5. The hot-rolled sheet was dried at a temperature of 170°C for two hours and, then, heat-treated at a temperature of 260°C for two days, and thereafter, at a temperature of 270°C for two days. The heat-treated polyethylene terephthalate sheet was preliminarily crushed by using a hammer mill and, then, pulverized by using a jet-stream pulverizing machine. The particles of the pulverized polyethylene terephthalate had an average size of 2.5 microns.

B. Preparation of a heat-resistant aromatic polymer material solution

90 parts by weight of a powdered poly-m-phenylene isophthalamide having an inherent viscosity (η inh) of 1.8, which had been determed in a concentration of 0.5 g/100 ml in a 95% sulfuric acid at a temperature of 30°C, were dissolved in a mixture solvent consisting of 910 parts by weight of N-methyl-2-pyrrolidone and 50 parts by weight of water.

C. Preparation of a dispersion

360 parts by weight of the finely pulverized polyethylene terephthalate were uniformly dispersed in the above-mentioned prepared poly-m-phenylene isophthalamide solution by using a kneader.

D. Preparation of a coagulating liquid

A coagulating liquid was prepared by mixing 20 parts by weight of N-methyl-2-pyrrolidone with 80 parts by weight of water.

E. Production of artificial pulp particles

A tube-stirrer type continuous pulp-forming apparatus having a stirring device composed of a combination of a stator having a baffle and a turbine wing type rotor, and a supply inlet for the dispersion, another supply inlet for the coagulating liquid and a discharge outlet for the resultant artificial pulp particle slurry, was used. The dispersion and the coagulating liquid were simultaneously fed at feeding rates of 0.4 kg/min. and 20 kg/min, respectively, to the pulp-forming apparatus, while the resultant slurry was discharged from the apparatus. The temperatures of the dispersion and the coagulating liquid were adjusted to 50°C and 35°C, respectively. The rotation number of the rotor was 9600 r.p.m.

The discharged slurry containing the resultant artificial pulp particles were allowed to stand at a temperature of 35°C for about 30 minutes. Thereafter, the slurry was placed in a Nutsche vacuum filtering device to separate the artificial pulp particles from the slurry. The filtering device was provided with a filter consisting of a 150 mesh stainless steel net. The resultant filtrate

was clear and contained substantially no polyethylene terephthalate particles. That is, all the polyethylene terephthalate particles were embedded within the matrix consisting of the poly-m-phenylene isophthalamide. The artificial pulp particles were completely washed with ion-exchanged water by using the Nutsche vacuum filtering device.

F. Production of paper-like sheet

An aqueous dispersion was prepared from 1.76 g (dry weight) of the artificial pulp particles and 0.44 g of aromatic polyamide fibers having a denier of 2.0 and a length of 5 mm. The aqueous dispersion was subjected to a wet paper-making process by using a Tappi Standard paper-making machine. It was observed that the paper-like sheet formed on a paper-forming net was readily separated from water and, therefore, the paper-forming procedure was smoothly carried out without difficulty. The resultant paper-like sheet was uniform in quality. The sheet was dried at a temperature of 105°C and, then, hot-pressed at a temperature of 220°C under a pressure of 200 $kg/cm^2$. The pressed paper-like sheet had a thickness of 105 microns and exhibited satisfactory properties as indicated below.

| | |
|---|---|
| Tensile strength | ... 2.4 $kg/mm^2$ |
| Ultimate elongation | ... 10% |
| Dielectric breakdown strength | ... 25 kv/mm |
| Equilibrium moisture content (65% RH) | ... 1.1% |
| Ratio in tensile strength of heat-treated sheet(*) to non-treated sheet | ... 122% |
| Ratio in ultimate elongation of heat-treated sheet(*) to non-treated sheet | ... 85% |

Note : (*)- The heat-treatment was applied to the paper-like sheet at a temperature of 210°C, for 100 hours, in the ambient atmosphere.

Comparative Example 2

The same procedure as those described in Example 6 were carried out, except that no polyethylene terephthalate particles were used. The resultant artificial pulp particles exhibited a poor paper-forming property. The resultant sheet exhibited an undesirably large equilibrium moisture content of 6.4%.

Example 7

A preparation of a dispersion

A solution (A) was prepared by the following procedures.

Two molar parts of trimellitic anhydride were condensed with one molar part of 4,4'-diamino-diphenylmethane in N-methyl-2-pyrrolidone to prepare a bis-imide compound. This bis-imide compound was reacted with 2 molar parts of trimellitic anhydride and 3 molar parts of 4,4'--diphenylmethane diisocyanate per molar part of the 4,4'-diaminodiphenylmethane to prepare a polyamide imide having an intrinsic viscosity of 0.78 determined is N-methyl-2-pyrrolidone at a temperature of 30°C. The resultant solution (A) contained 25% by weight of the polyamide imide in N-methyl-2-pyrrolidone.

A dispersion (B) was prepared by mixing 2350 parts by weight of N-methyl-2-pyrrolidone with 190 parts by weight of ion-exchanged water and, then, with 1275 parts by weight of the same polyethylene terephthalate particles, and by homogenizing the mixture for 30 minutes by using a homogenizing mixer.

A dispersion (C) was prepared by uniformly mixing 900 parts by weight of the slution (A) with 3815 parts by weight of the dispersion (B).

B. Preparation of a coagulating liquid

A coagulating liquid was prepared by mixing 70 parts by weight of N-methyl-2-pyrrolidone with 30 parts by weight of water.

C. Production of artificial pulp particles

The dispersion (C) and the coagulating liquid were simultaneously fed at feeding rates of 0.5 kg/min and

7 kg/min, respectively, into the same pulp-forming apparatus as that described in Example 1, while discharging the resultant slurry of the artificial pulp particles from the apparatus. The temperatures of the dispersion (C) and the coagulating liquid were adjusted to 30°C and 35°C, respectively, and the rotation number of the rotor was 9,600 r.p.m.

The slurry was subjected to a centrifugal separater to separate the resultant artificial pulp particles from the slurry. The separated artificial pulp particles were washed with ion-exchanged water. The content of the polyethylene terephthalate in the artificial pulp particles was 85% by weight, which was determined by treating a predetermined amount of the artificial pulp particles with N-methyl-2-pyrrolidone at room temperature to allow the polyethylene terephthalate to be dissolved thereinto and, then, by measuring the loss in weight of the pulp particles due to the treatment.

D. Production of a paper-like sheet

An aqueous dispersion containing 1.32 g (dry weight) of the artificial pulp particles and 0.88 g of polyethylene terephthalate fibers having a denier of 1.5 and a length of 5 mm was subjected to a wet paper-making process by using a Tappi Standard paper-making machine. It was observed that the sheet formed on a paper-forming net was readily separated from water and, therefore, the paper-making procedure was smoothly carried out without difficulty. The resultant paper-like sheet was uniform in quality. The paper-like sheet was hot-pressed at a temperature of 230°C under a pressure of 200 $kg/cm^2$. The hot pressed paper-like sheet exhibited the following properties.

| | |
|---|---|
| Tensile strength | ... 3.5 $kg/mm^2$ |
| Ultimate elongation | ... 17% |
| Dielectric breakdown strength | ... 20 kv/mm |
| Equilibrium moisture content (65% RH) | ... 0.7% |

Example 8

The same procedures as those mentioned in Example 6 were carried out, except that the finely pulverized polyethlene therephthalate was replaced by a finely pulverized polyethylene 2,6-naphthalate which had been produced by the following method.

Polyethylene 2,6-naphthalate filaments each having a denier of 2, were produced from polyethylene 2,6-naphthalate having an intrinsic viscosity of 0.65 by melt-spinning it and, then, by drawing the melt-spun filaments at a draw ratio of 4.0. The drawn filaments were dried at a temperature of 170°C for two hours and, thereafter, heat-treated at a temperature of 255°C for 24 hours, and then, at a temperature of 265°C for 24 hours in a nitrogen gas atmosphere. The heat-treated filaments exhibited a melting point of 296°C. The filaments were cut to a length of about 5 mm. The resultant cut fibers were pulverized by using the same pulverizing machine as that described in Example 6. The resultant particles of the polyethylene 2,6-naphthalate had an average size of about 3.0 microns.

The resultant artificial pulp particles exhibited a satisfactory paper-making property. The resultant paper--like sheet was hot-pressed at a temperature of 290°C under a pressure of 200 $kg/cm^2$. The hot-pressed paper-like sheet exhibited the following properties.

| | |
|---|---|
| Tensile strength | ... 3.5 $kg/mm^2$ |
| Ultimate elongation | ... 7.0% |
| Equilibrium moisture content (65%RH) | ... 0.8% |
| Dielectric breakdown strength | ... 35 kv/mm |
| Ratio in tensile strength of heated sheet(*) to non-treated sheet | ... 110% |
| Ratio in ultimate elongation of heat-treated sheet(*) to non-treated sheet | ... 79% |

Note : (*)- The heat treatement was carried out at a temperature of 210°C, for 100 hours, in the ambient atmosphere.

Example 9

The same procedures as those mentioned in Example 6 were carried out, except that the finely pulverized polyethylene terephthalate was replaced by a polyethylene terephthalate powder which had been obtained by screening a powder generated in a drying process for polyethylene terephthalate pellets, to be used for producing polyethylene terephthalate filaments or fibers, through a 200 mesh sieve.

The resultant artificial pulp particles exhibited a satisfactory paper-making property. Also, the resultant paper-like sheet exhibited similar properties as those mentioned in Example 6.

Example 10

The same procedures as those described in Example 6 were carried out, except that the finely pulverized polyethylene terephthalate was replaced by a mixture of 340 parts by weight of the same finely pulverized polyethylene terephthalate as that described in Example 6 and 20 parts by weight of tarc. The resultant artificial pulp particles exhibited a satisfactory paper-forming property. Also, during due paper-making process, it was found that substantially no polyethylene therephthalate and tarc were

removed from the artificial pulp particles. The resultant paper-like sheet exhibited the following properties.

| | |
|---|---|
| Tensile strength | ... 2.4 $kg/mm^2$ |
| Ultimate elongation | ... 12% |
| Dielectric breakdown strength | ... 23 kv/mm |
| Equilibrium moisture content (65%RH) | ... 0.9% |

CLAIMS

1. Artificial pulp particles characterized in that a plurality of fine particulate core constituents consisting of a polyester material are embedded within and connected to each other by a matrix constituent consisting of a heat-resistant aromatic polymer material which is soluble in a solvent not capable of dissolving therein said polyester material, to form a body of pulp particles.

2. Artificial pulp particles as claimed in claim 1, wherein each of said fine particulate core constituents has an average size not exceeding 500 microns.

3. Artificial pulp particles as claimed in claim 1, wherein the amount of said fine particulate core constituents is in a range of from 10 to 90%, based on the entire weight of said pulp particles.

4. Artificial pulp particles as claimed in claim 1, wherein the size of said pulp particles 10 mesh or smaller.

5. Artificial pulp particles as claimed in claim 1, wherein said heat-resistant aromatic polymer material has a softening point of 155°C or more and exhibits an excellent resistance to thermal deterioration thereof at a temperature in a range of from 180°C to 250°C in the ambient atmosphere.

6. Artificial pulp particles as claimed in claim 1, wherein said polyester material contains at least 85% by weight of at least one member selected from the group consisting of:

(A) polyesters containing at least 85 molar % of an ethylene terephthalate recuring unit;

(B) polyesters containing at least 85 molar % of at least one member selected from the group consisting of an ethylene 2,6-naphthalate recurring unit and an ethylene 2,7-naphthalate recurring unit;

(C) polyesters containing at least 85 molar % of at least one wholly aromatic ester recurring unit, and;

(D) polyesters containing at least 85 molar % of a butylene terephthalate recurring unit.

7. Artificial pulp particles as claimed in claim 1,

wherein said polyester material consists essentially of a member selected from the group consisting of polyethylene terephthalate and polyesters composed of at least one member selected from the group consisting of ethylene 2,6--naphthalate and ethylene 2,7-naphthalate recurring units.

8. Artificial pulp particles as claimed in claim 1, wherein said heat-resistant aromatic polymer material contains at least 85% by weight of at least one member selected from the group consisting of:

(A) aromatic polyamides containing at least 85 molar % of at least one recurring unit selected from the group consisting of those of the formulae (I') and (II'):

$$-CO-Ar_4-CONH-Ar_5-NH- \quad (I')$$

and

$$-NH-Ar_6-CO- \quad (II')$$

wherein $Ar_4$ , $Ar_5$ and $Ar_6$ respectively represent a divalent aromatic radical;

(B) nitrogen containing heterocyclic polymers selected from the group consisting of:

(a) aromatic polyamide imides containing at least 85 molar % of at least one recurring unit selected from those of the formula (III):

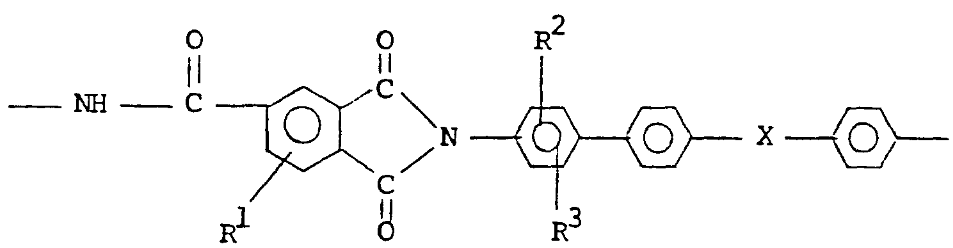

(III)

wherein X represents a divalent bond selected from the group consisting of -O-, -SO- -CO- and alkylene radical having 1 to 2 carbon atoms, and $R^1$, $R^2$, and $R^3$ respectively represent, independently from each other, a member selected from the group consisting of a hydrogen atom, alkyl radicals having 1 to 2 carbon atoms, alkoxyl radical having 1 to 2 carbon atoms and halogen atoms;

(b) aromatic polyamide imidazoles

containing at least 85 molar % of at least one recurring unit selected from those of the formula (IV):

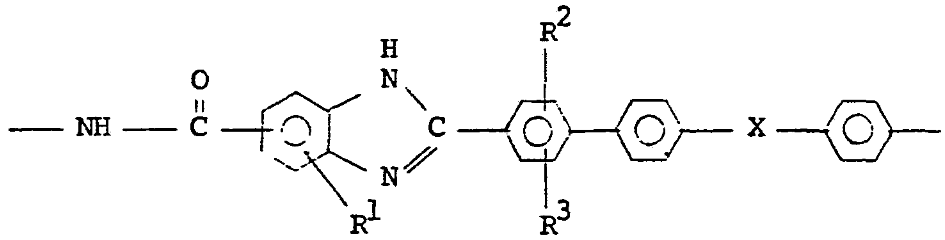

(IV)

wherein X, $R^1$, $R^2$ and $R^3$ are as defined above;

(c) aromatic polyimides containing at least 85 molar % of at least one recurring unit selected from those of the formula (V):

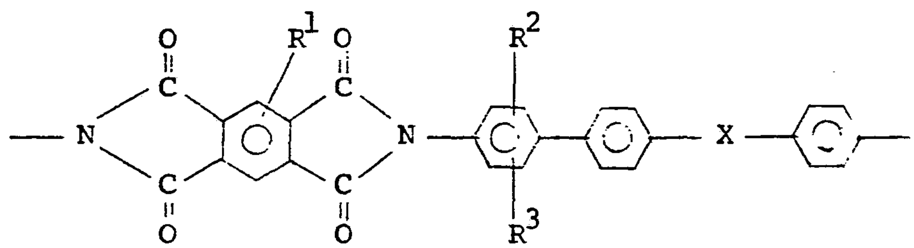

(V)

wherein X, $R^1$, $R^2$ and $R^3$ are as defined above;

(d) aromatic polyazoles selected from the group consisting of polybenzimidazoles, polybenzoxazoles and polybenzthiazoles, each unsubstituted or substituted by at least one member selected from the group consisting of alkyl radicals having 1 to 2 carbon atoms, alkoxyl radicals having 1 to 2 carbon atoms and halogen atoms;

(e) polymers selected from the group consisting of polyquinozoline-dions, polybenzoxadinones, polyquinozolones and polyquinoxalines, and; (5) polymers selected from the group consisting of polythiaxoles, polyoxazoles, polyoxadiazoles, polyhydantoins and polyparabanic acid;

(C) aromatic polyamide hydrazides containing at least 85 molar % of at least one recurring unit selected from those of the formula (VI):

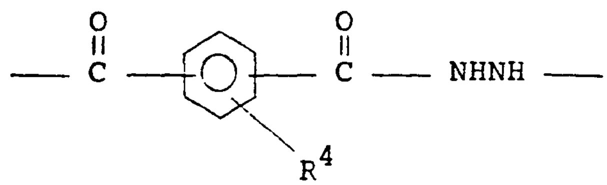

(VI)

wherein $R^4$ represents a member selected from the group consisting of a hydrogen atom, alkyl radicals having 1 to 2 carbon atoms, alkoxyl radicals having 1 to 2 carbon atoms and halogen atoms;

(D) polymers containing at least 85 molar % of at least one recurring unit selected from those of the formula (VII):

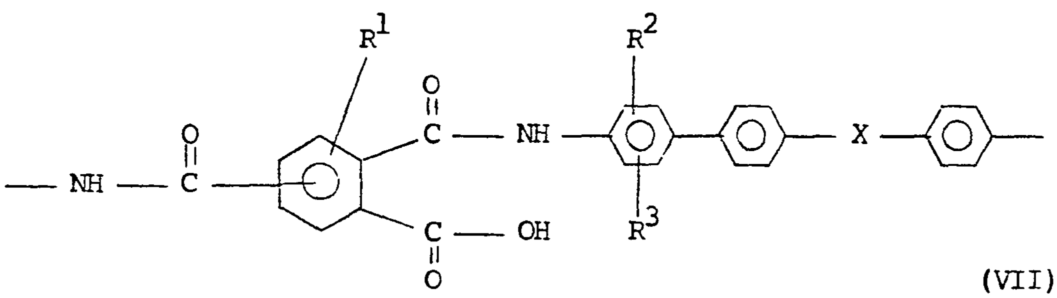

(VII)

wherein X, $R^1$, $R^2$ and $R^3$ are as defined above;

(E) polymers selected from the group consisting of aromatic polyhydrazides and aromatic polyureas, and;

(F) polyphenylene oxides and polyarylene oxides.

9. Artificial pulp particles as claimed in claim 8, herein said aromatic polyamide contains at least 85 molar % of an m-phenylene isophthalamide recurring unit.

10. A process as claimed in claim 1, wherein said fine particulate polyester material is dispersed in an amount of from 10 to 95%, based on the entire weight of said artificial pulp particles.

11. A process for producing artificial pulp particles characterized by the steps of:

(1) preparing a dispersion in which fine particulate polyester material is dispersed in a solution of a heat-resistant aromatic polymer material in a solvent which is not capable of dissolving therein said

polyester material;

(2) bringing said dispersion into contact with a coagulating liquid while vigorously stiring the resultant mixture, whereby said heat-resistant aromatic polymer material is coagulated from said mixture while forming a number of particles, in each of which a plurality of fine particulate polyester material core constituents are embedded within and connected to each other by a matrix constituent consisting of said coagulated aromatic polymer material, and;

(3) separating said particles from said mixture.

12. A process as claimed in claim 11, wherein said solvent comprises at least one organic compound selected from the group consisting of N-methyl-2-pyrrolidone, N,N-dimethylformamide, N,N-dimethylacetamide, dimethyl sulfoxide, hexamethylphosphoramide and tetramethyl urea.

13. A process as claimed in claim 12, wherein said solvent contains at least one inorganic salt selected from the group consisting of lithium chloride and calcium chloride.

14. A process as claimed in claim 13, wherein the amount of said inorganic salt is in a range of from 0.5 to 40%, based on the entire weight of said solvent.

15. A process as claimed in claim 11, wherein said heat-resistant aromatic polymer is contained in an amount of 2 to 15% by weight in said solution.

16. A process as claimed in claim 11, wherein said coagulating liquid contains at least one member selected from the group consisting of water, glycerol, ethylene glycol, and mixtures of water with a solvent the same as that used for dissolving said heat-resistant aromatic polymer material.

17. Paper-like sheet prepared from the aritificial pulp particles as claimed in claim 1.

18. Paper-like sheet as claimed in claim 17, wherein said paper-like sheet contains short fibers uniformly mixed with said artificial pulp particles.

19. Paper-like sheet as claimed in claim 18, wherein the amount of said short fibers is in a range of from 20 to 95% by weight.

20. Paper-like sheet as cliamed in claim 18, wherein said short fibers have a denier of from 0.5 to 10.

21. Paper-like sheet as claimed in claim 18, wherein said short fibers have a length of from 1 to 30 mm.

0027516

European Patent Office

# EUROPEAN SEARCH REPORT

Application number EP 80104958.6

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | GB - A - 1 520 574 (TEIJIN)<br>+ Pages 4,7,13 +<br>-- | 1,11, 12,17 | C 08 L 67/02<br>D 21 H 5/20<br>C 08 J 3/16//<br>(C 08 L 67/02<br>C 08 L 79/04<br>C 08 L 77/10) |
| | CH - A - 592 204 (BASF)<br>+ Columns 1-3 +<br>-- | 1,11, 12,17 | |
| | GB - A - 2 014 208 (MITSUBISHI) (22-08-1979)<br>+ Totality +<br>-- | 1,11, 12,17 | TECHNICAL FIELDS SEARCHED (Int.Cl. 3) |
| | US - A - 2 999 788 (MORGAN)<br>+ Columns 1,2; examples 128, 171,176 +<br>---- | 1,11, 12,17 | C 08 L 67/00<br>C 08 L 77/00<br>D 21 H<br>C 08 J 3/00<br>C 08 L 79/00 |

CATEGORY OF CITED DOCUMENTS

X: particularly relevant
A: technological background
O. non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| VIENNA | 18-11-1980 | HOCHHAUSER |

EPO Form 1503.1 06.78